# EUROPÄISCHE PATENTSCHRIFT

(11) **EP 4 500 495 B1**
(45) Veröffentlichungstag und Bekanntmachung des Hinweises auf die Patenterteilung: **05.11.2025**
(21) Anmeldenummer: 24709698.5
(22) Anmeldetag: 05.03.2024
(51) Int. Cl.: G07D 7/20, G07D 7/12

(54) **VERFAHREN ZUM AUTHENTIFIZIEREN EINER AUF IHREM SUBSTRAT MINDESTENS EINE BEDRUCKTE FLÄCHE AUFWEISENDEN BANKNOTE**
METHOD FOR AUTHENTICATING A BANKNOTE HAVING AT LEAST ONE PRINTED AREA ON THE SUBSTRATE THEREOF
PROCÉDÉ D'AUTHENTIFICATION D'UN BILLET DE BANQUE COMPORTANT AU MOINS UNE ZONE IMPRIMÉE SUR SON SUBSTRAT

(30) Priorität: 23.03.2023 DE 102023107278
(43) Veröffentlichungstag der Anmeldung: 05.02.2025
(73) Patentinhaber: Koenig & Bauer AG, 97080 Würzburg (DE)
(72) Erfinder: DÖRKSEN, Helene, 24568 Kaltenkirchen (DE); GILLICH, Eugen, 33659 Bielefeld (DE); SÜRMELI, Baris Gün, 33615 Bielefeld (DE)
(74) Vertreter: Koenig & Bauer AG
(86) Internationale Anmeldenummer: PCT/EP2024/055660
(87) Internationale Veröffentlichungsnummer: WO 2024/194004

(56) Entgegenhaltungen:
- EP-A2- 1 484 719
- WO-A1-2007/105891
- US-A1- 2012 328 179

## Beschreibung

Die Erfindung betrifft ein Verfahren zum Authentifizieren einer auf ihrem Substrat mindestens eine bedruckte Fläche aufweisenden Banknote gemäß Anspruch 1.

Durch die WO 2008/146262 A2 ist ein Verfahren zum Überprüfen der Authentizität von Sicherheitsdokumenten bekannt, insbesondere von Banknoten, wobei authentische Sicherheitsdokumente Sicherheitsmerkmale aufweisen, die auf den Sicherheitsdokumenten gedruckt, angebracht oder auf andere Weise bereitgestellt werden, wobei die Sicherheitsmerkmale charakteristische visuelle Merkmale aufweisen, die intrinsisch bei zur Erstellung der Sicherheitsdokumente angewandten Verfahren sind, wobei die Sicherheitsmerkmale Tiefdruckmuster, Linienversatzmuster, Buchdruckmuster, optisch diffraktive Strukturen und/oder Kombinationen davon umfassen, wobei das Verfahren die folgenden Schritte umfasst:
- Erfassen eines Beispielbildes von mindestens einem Bereich von Interesse der Oberfläche eines zu authentifizierenden Kandidatendokuments, wobei der Bereich von Interesse mindestens einen Teil eines der Sicherheitsmerkmale umfasst;
- digitales Verarbeiten des Beispielbildes durch Ausführen eines Zerlegens des Beispielbildes in mindestens einen Skalen-Teilraum, der hochaufgelöste Details des Beispielbildes enthält, und Extrahieren klassifizierender Merkmale aus dem Skalen-Teilraum, dessen extrahierte klassifizierende Merkmale für ein Positionieren des Kandidatendokuments in einem Merkmalsraum, der ein Klassifizieren des Kandidatendokuments ermöglicht, benutzt werden; und
- Ableiten einer Authentizitätsbewertung des Kandidatendokuments auf Basis der extrahierten klassifizierenden Merkmale und Positionieren des Kandidatendokuments im Merkmalsraum, wobei die digitale Verarbeitung des Beispielbildes umfasst:
- Ausführen einer Wavelet-Transformation des Beispielbildes zum Ableiten mindestens eines Satzes von Wavelet-Koeffizienten, die die hochaufgelösten Details des Beispielbildes in kleinem Maßstab darstellen; und
- Verarbeiten der Wavelet-Koeffizienten, um die klassifizierenden Merkmale zu extrahieren.

Durch die US 2016/0012658 A1 ist ein Verfahren zur Authentifizierung von Sicherheitsdokumenten, insbesondere Banknoten, bekannt. Dieses Verfahren basiert auf einer Analyse von intrinsischen Merkmalen der Sicherheitsdokumente, die durch Tiefdruck hergestellt werden, wobei die Analyse eine Zerlegung eines oder mehrerer Musterbilder von mindestens einem Teil eines in Frage kommenden zu authentifizierenden Dokuments basierend auf Wavelets einbezieht, wobei jedes Musterbild durch Durchführen einer Wavelet-Transformation des Musterbildes digital verarbeitet wird, um einen Satz von Klassifizierungsmerkmalen abzuleiten, der eine Klassifizierung des in Frage kommenden Dokuments innerhalb eines mehrdimensionalen Merkmalsraums (f) ermöglicht, wobei das Verfahren auf einem adaptiven Wavelet-Ansatz basiert, wobei der adaptive Wavelet-Ansatz u. a. den Schritt aufweist, vor dem Ausführen der Wavelet-Transformation eine Kategorisierungskarte (C-Karte) mit lokalen Informationen über unterschiedliche Tiefdrucklinienstrukturen, die auf den Sicherheitsdokumenten zu finden sind, zu definieren.

Die WO 2007/105891 A1 offenbart ein Verfahren zum Prüfen von Banknoten mittels Wavelet-Transformationen. Dabei wird ein Bild der Banknote in Blöcke unterteilt, welche einer Wavelet-Transformation unterzogen werden. Aus den Wavelet-Koeffizienten wird ein Feature-Vektor abgeleitet, wobei lediglich relevante Komponenten zur Prüfung berücksichtigt werden; nicht relevante Komponenten werden vernachlässigt.

Der Erfindung liegt die Aufgabe zugrunde, ein Verfahren zum Authentifizieren einer auf ihrem Substrat mindestens eine bedruckte Fläche aufweisenden Banknote zu schaffen. Die Aufgabe wird erfindungsgemäß durch die Merkmale des Anspruches 1 gelöst. Die abhängigen Ansprüche betreffen vorteilhafte Ausgestaltungen und/oder Weiterbildungen der gefundenen Lösung.

Die mit der Erfindung erzielbaren Vorteile bestehen insbesondere darin, dass eine aktuell zu prüfende, d. h. hier zu authentifizierende Banknote zuverlässig als eine echte, authentische Banknote oder als eine gefälschte Banknote identifiziert und klassifiziert werden kann. Weitere Vorteile sind aus der folgenden Beschreibung ersichtlich.

Ein Ausführungsbeispiel der Erfindung ist in den Zeichnungen dargestellt und wird im Folgenden näher beschrieben.

Es zeigen:
- Fig. 1: eine Anordnung zum Erfassen einer bedruckten Fläche auf einem Substrat einer Banknote und zum Visualisieren dieser Fläche auf einer Anzeigeeinrichtung;
- Fig. 2: eine Aufteilung der abgebildeten Fläche der Banknote in mehrere ROls;
- Fig. 3: eine Transformation jedes ROI zu einem Vektor;
- Fig. 4: eine Verkettung von einzelnen jeweils eine ROI darstellenden Vektoren zu einem die abgebildete bedruckte Fläche ganzheitlich darstellenden Vektor;
- Fig. 5: eine aus die Abbildung ganzheitlich repräsentierenden Vektoren gebildete Matrix;
- Fig. 6: eine durch Selektion von Merkmalen gewonnene neue Matrix;

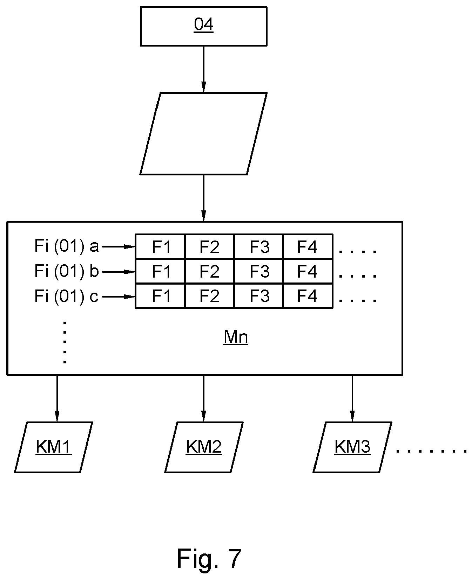

- Fig. 7: eine Darstellung unterschiedlicher aus der neuen Matrix gewonnener Klassifikationsmodelle;
- Fig. 8: eine Darstellung der Gewinnung einer finalen Klassifikation durch Verwendung mehrerer Klassifikationsmodelle.

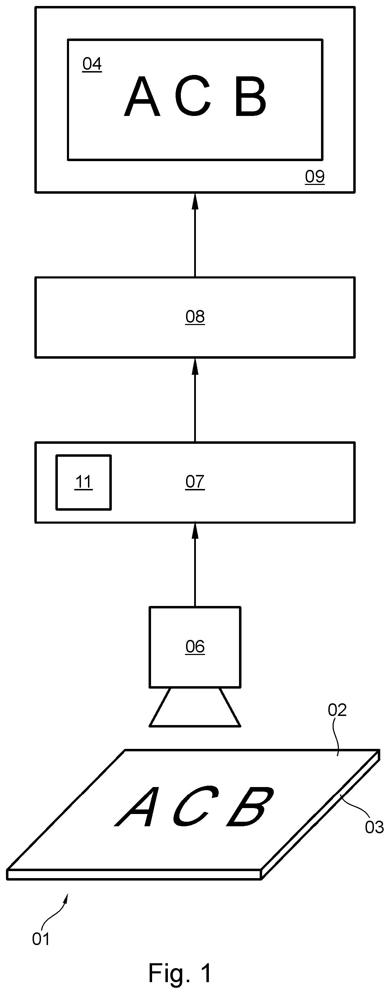

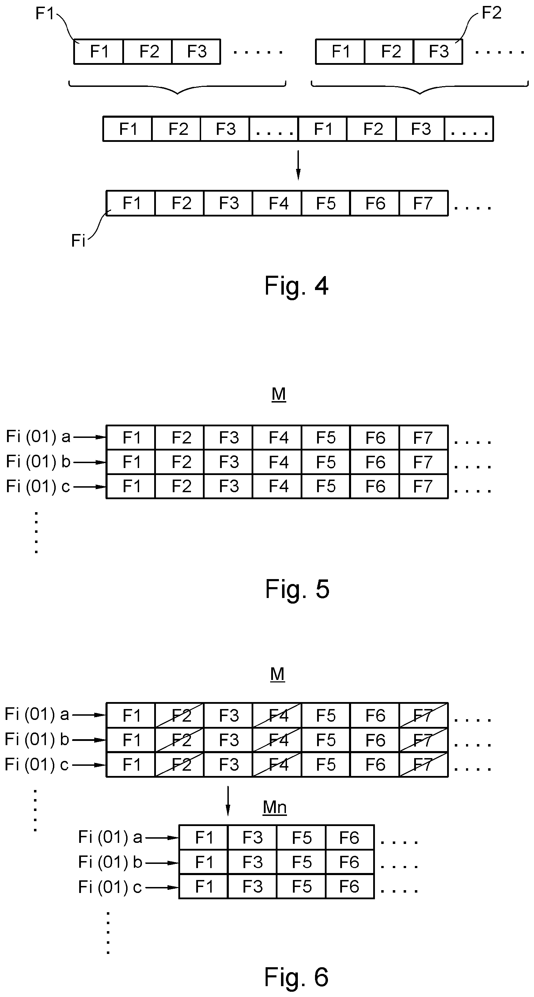

Fig. 1 zeigt beispielhaft und nur schematisch eine z. B. auf einer vorzugsweise elektronischen Anzeigeeinrichtung 09 dargestellte optische Wiedergabe einer Abbildung 04 einer auf einem Substrat 03 einer Banknote 01 angeordneten, insbesondere in einem industriellen Druckprozess von einer Druckmaschine bedruckten Fläche 02, wobei diese Abbildung 04 mittels einer die betreffende bedruckte Fläche 02 erfassenden optoelektronischen Erfassungseinrichtung 06 erstellt worden ist. Das vollflächig oder teilflächig abgebildete Substrat 03 der Banknote 01 besteht z. B. aus einem Papierwerkstoff oder aus einem Polymerwerkstoff. Die optoelektronische Erfassungseinrichtung 06 ist z. B. als eine Halbleiterkamera ausgebildet und ist z. B. eine Halbleiterkamera eines mobilen elektronischen Gerätes, insbesondere eines Smartphones oder eines Tablets. Die derart erstellte Abbildung 04 der bedruckten Fläche 02 der Banknote 01 bildet eine in einer elektronischen Speichereinrichtung 07 gespeicherte Datenmenge aus digitalen Bilddaten, wobei diese Bilddaten mittels einer mit der Speichereinrichtung 07 datentechnisch verbundenen Prozessoreinheit 08 vorzugsweise in ihrer Gesamtheit auf der mit dieser Prozessoreinheit 08 datentechnisch verbundenen Anzeigeeinrichtung 09 visualisiert werden oder zumindest visualisierbar sind. Noch nicht zur Authentifikation einer Banknote 01 ausgewertete Bilddaten werden nachfolgend als Roh-Bilddaten bezeichnet.

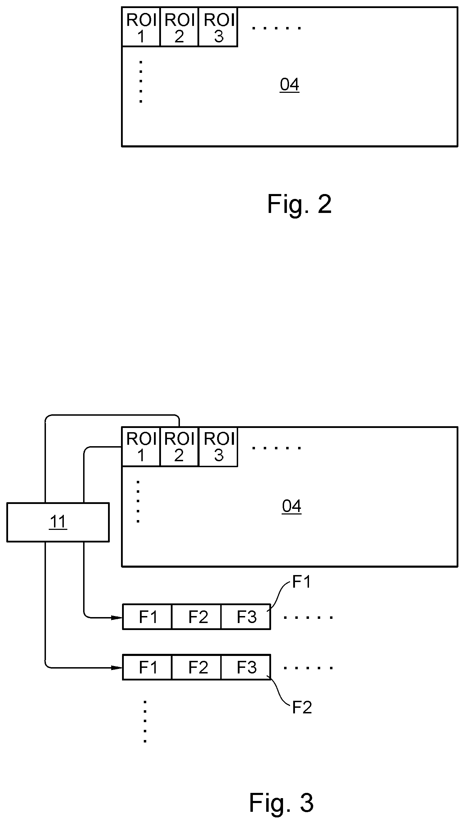

Zur Authentifikation der Banknote 01 wird die Abbildung 04 der erfassten bedruckten Fläche 02 zumindest teilweise, vorzugsweise vollständig in einem ersten z. B. in der Prozessoreinheit 08 automatisch ablaufenden Verfahrensschritt in mehrere zweidimensionale Teilbereiche aufgeteilt und auf diese Weise partitioniert. Diese Teilbereiche der betreffenden Abbildung 04 werden in einer computergestützten Bildverarbeitung auch jeweils mit dem englischsprachigen Begriff "Region of Interest" (ROI) bezeichnet, was übersetzt "Bereich von Interesse" bedeutet. Da die Abbildung 04 der erfassten bedruckten Fläche 02 im Regelfall in eine Vielzahl von ROls aufgeteilt wird, wird jeder dieser ROls für ihre Identifikation jeweils z. B. eine Ordnungszahl n angehängt (n = 1, 2, 3, ...). In der Fig. 2 ist angedeutet, dass die Abbildung 04 der erfassten bedruckten Fläche 02 z. B. in zeilenweise und spaltenweise angeordnete ROls aufgeteilt ist. Die Roh-Bilddaten dieser ROls werden in mehreren nachfolgenden Verfahrensschritten hinsichtlich mindestens eines zuvor festgelegten Merkmals oder Parameters computergestützt, z. B. durch ein in der mit der Erfassungseinrichtung 06 zusammenwirkenden Prozessoreinheit 08 ausgeführtes Programm ausgewertet.

Die ROls bilden i.d.R. rechteckige, vorzugsweise quadratische, insbesondere gleichgroße Teilbereiche der erfassten bedruckten Fläche 02 einer bestimmten Banknote 01 ab, wobei diese Teilbereiche eine bestimmte Menge an Bildpunkten, z. B. 100x100 Bildpunkte bis 400x400 Bildpunkte, und damit eine bestimmte Untermenge der durch die Abbildung 04 gegebenen Roh-Bilddaten beinhalten. Diese Unterteilung der Abbildung 04 der erfassten bedruckten Fläche 02 in ROls ist deshalb vorteilhaft, weil sich kleinere Teilbereiche leichter und schneller mit Mitteln der computergestützten Bildverarbeitung analysieren lassen. Auch haben nicht alle Teilbereiche bzw. ROls die gleiche Aussagekraft dahingehend, ob eine hinsichtlich ihrer Echtheit zu prüfende Banknote 01 tatsächlich echt oder doch gefälscht ist, so dass innerhalb der Abbildung 04 der erfassten bedruckten Fläche 02 eine Selektion aussagekräftiger Teilbereiche und eine Konzentration auf diese aussagekräftigen Teilbereiche möglich und vorteilhaft ist, worauf nachfolgend eingegangen wird.

In einem zweiten computergestützt ausgeführten Verfahrensschritt ist vorgesehen, dass die Roh-Bilddaten jeder ROln mit n = 1, 2, 3, ... der betreffenden Abbildung 04 mittels einer ein Programm ausführenden insbesondere digitalen z. B. in der Prozessoreinheit 08 implementierten Transformiereinrichtung 11 jeweils in einen jeweils mehrere Elemente aufweisenden Vektor Fm mit m = 1, 2, 3, ... transformiert wird, wie es in der Fig. 3 angedeutet ist. Ein Vektor ist ein mathematisches Objekt, das mittels seiner Elemente darstellbar ist. Dabei charakterisiert jedes der Elemente des jeweiligen Vektors Fm mit m = 1, 2, 3, ... in der hier zugrundeliegenden Anwendung jeweils genau ein Merkmal in der betreffenden ROln mit n = 1, 2, 3, ..., wobei unterschiedliche Elemente des jeweiligen Vektors Fm mit m = 1, 2, 3, ... jeweils voneinander verschiedene Merkmale in der betreffenden ROln mit n = 1, 2, 3, ... charakterisieren. Diese spezifischen Merkmale werden z. B. in der Prozessoreinheit 08 aus den zu einer bestimmten ROI gehörenden von der optoelektronischen Erfassungseinrichtung 06 bereitgestellten Roh-Bilddaten der Abbildung 04 der bedruckten Fläche 02 eines bestimmten Exemplars a; b; c der Banknote 01 extrahiert. Diese Extraktion kann durch die Ausführung mindestens einer ersten mathematischen Operation wie z. B. durch die Ausführung einer Wavelet-Transformation und/oder durch die Verwendung von statistischen Momenten aus einem Wavelet-Histogramm erfolgen. Diese Momente sind z. B. ein arithmetischer Mittelwert einer Amplitudenverteilung im Wavelet-Histogramm als ein erstes Moment, eine Varianz aus der Amplitudenverteilung im Wavelet-Histogramm als ein zweites Moment, eine Schiefe der Amplitudenverteilung im Wavelet-Histogramm als ein drittes Moment und/oder eine Wölbung der Amplitudenverteilung im Wavelet-Histogramm als ein viertes Moment.

In einem dritten computergestützt z. B. in der Prozessoreinheit 08 ausgeführten Verfahrensschritt werden alle aus den ROln mit n = 1, 2, 3, ... einer bestimmten Abbildung 04 transformierten Vektoren Fm mit m = 1, 2, 3, ... durch eine weitere zweite mathematische Operation miteinander verkettet, um aus der Vielzahl der einzelnen aus den ROls einer bestimmten Abbildung 04 transformierten Vektoren Fm mit m = 1, 2, 3, ... einen einzigen Vektor Fi mit i = 1, 2, 3, ... zu bilden, welcher die gesamte Abbildung 04 der erfassten bedruckten Fläche 02 der betreffenden Banknote 01 repräsentiert. Dabei sind die Elemente i dieses die betreffende Abbildung 04 ganzheitlich repräsentierenden Vektors Fi durch die jeweiligen aus den ROln mit n = 1, 2, 3, ... der betreffenden Abbildung 04 gebildeten Vektoren Fm mit m = 1, 2, 3, ... gebildet. Dieser dritte Verfahrensschritt ist in der Fig. 4 dargestellt.

Die vorgeschlagene Lösung sieht vor, dass in einem der aktuell zu prüfenden Banknote 01 vorausgehenden Verfahren mehrere Exemplare a, b, c, ... dieses Typs von Banknote 01 in der zuvor beschriebenen Weise bearbeitet werden, wobei der Typ einer Banknote 01 z. B. durch deren Währung und Nominalwert festgelegt ist. Das bedeutet, dass von mehreren Exemplaren a, b, c, ... des bestimmten Typs der zu authentifizierenden Banknote 01, d. h. von mehreren Exemplaren a, b, c, ... dieser Banknote 01 gleicher Währung und gleichen Nominalwertes, mit der optoelektronischen Erfassungseinrichtung 06 jeweils eine Abbildung 04 von zumindest einer der bedruckten Flächen 02 dieser Banknoten 01 in der zuvor beschriebenen Weise erstellt wird. Nachdem von mehreren Abbildungen 04 des Typs der zu authentifizierenden Banknote 01 jeweils ein die jeweilige Abbildung 04 ganzheitlich repräsentierender Vektor Fi gebildet worden ist, werden diese Vektoren Fi mit i = 1, 2, 3, ... in einem z. B. in der Prozessoreinheit 08 automatisch ablaufenden vierten Verfahrensschritt in einer Matrix M angeordnet, wie es in der Fig. 5 beispielhaft dargestellt ist. Dabei sind in jeder Zeile der betreffenden Matrix M jeweils die die betreffende Abbildung 04 ganzheitlich repräsentierenden Vektoren Fi mit i = 1, 2, 3, ... angeordnet und in den Spalten der betreffenden Matrix M sind jeweils die spezifischen Merkmale aus den betreffenden ROls angeordnet, wobei in jeder Spalte der betreffenden Matrix M jeweils gleiche Merkmale aus den betreffenden ROls angeordnet sind.

In Fig. 6 ist verdeutlicht, dass in einem z. B. in der Prozessoreinheit 08 automatisch ablaufenden fünften Verfahrensschritt aus der in der zuvor beschriebenen Weise erstellten Matrix M nun anhand mindestens eines zuvor festgelegten Kriteriums diejenigen Merkmale selektiert werden, die eine höchstmögliche Genauigkeit bei der vorgesehenen Authentifikation einer bestimmten Banknote 01 sicherstellen. Das der Selektion zugrundeliegende Kriterium besteht vorzugsweise darin, dass z. B. von der Prozessoreinheit 08 analysiert wird, welchen Beitrag die in einer bestimmten Spalte der Matrix M angeordneten Merkmale aus den betreffenden ROls jeweils zur Authentifikation eines bestimmten Typs von Banknote 01 leisten. Bei dieser Analyse wird durch Ausführung einer dritten mathematischen Operation eine Korrelation zwischen jedem dieser Merkmale und einem bestimmten Klassenvektor bestimmt, wobei der Klassenvektor ein Vektor mit einer zuvor festgelegten Klasseninformation ist. So weist der Klassenvektor als Klasseninformation eine zuvor festgelegte erste Maßzahl für eine echte, authentische Banknote 01 und eine zuvor festgelegte zweite von der ersten verschiedene Maßzahl für eine gefälschte Banknote 01 auf. Beispielsweise hat die Klasseninformation den Wert Eins für eine echte, authentische Banknote 01 und den Wert Null für eine gefälschte Banknote 01. Aufgrund dieser Bestimmung der Korrelation zwischen jedem der in einer bestimmten Spalte der Matrix M angeordneten Merkmale und einem bestimmten Klassenvektor wird dieser Verfahrensschritt auch als Klassifikation bezeichnet.

In der im vierten Verfahrensschritt erstellten Matrix M werden nun in einem wie zuvor z. B. in der Prozessoreinheit 08 automatisch ablaufenden sechsten Verfahrensschritt zumindest diejenigen Spalten und damit diejenigen Merkmale eliminiert, die zum Authentifizieren von Banknoten 01 nicht geeignet sind. Dies ist in der Fig. 6 durch Streichung von Spalten bzw. von Merkmalen dargestellt. Nichtsdestoweniger verbleibt eine bereinigte neue Matrix Mn, in der unterschiedliche Merkmale zum Authentifizieren von Banknoten 01 wahlweise bereitstehen. Bei der Ausführung des Verfahrens zum Authentifizieren einer Banknote 01 können demnach unterschiedliche Merkmale aus der bereinigten neuen Matrix Mn gewählt bzw. selektiert werden. Jede dieser Selektionen ergibt jeweils ein Klassifikationsmodell KM, so dass durch unterschiedliche Selektionen aus der in der zuvor beschriebenen Weise erstellten neuen Matrix Mn unterschiedliche Klassifikationsmodelle KMx mit x = 1, 2, 3, ... gebildet werden.

Es wird nun zur Verbesserung der Zuverlässigkeit der Authentifikation einer Banknote 01 vorgeschlagen, dass die Authentifikation einer neuen, d. h. bisher ungeprüften und daher aktuell zu authentifizierenden Banknote 01 unter Verwendung mehrerer, vorzugsweise parallel verwendeter Klassifikationsmodelle KMx mit x = 1, 2, 3, ... durchgeführt wird. Zur Authentifikation der neuen, d. h. bisher ungeprüften und daher aktuell zu authentifizierenden Banknote 01 wird von dem diese Authentifikation ausführenden z. B. als Smartphone oder Tablet ausgebildeten Gerät nach der Verwendung von mehreren Klassifikationsmodellen KMx mit x = 1, 2, 3, ... entweder das Ergebnis, d. h. diejenige Klassifikation desjenigen Klassifikationsmodells KM verwendet, welches bei einer zuvor durchgeführten Authentifikation von Banknoten 01 desselben Typs zu Ergebnissen, d. h. Klassifikationen mit der höchsten Genauigkeit und Zuverlässigkeit geführt hat, oder die finale, d. h. endgültige Klassifikation dieser Banknote 01 erfolgt auf der Grundlage einer Übereinstimmung der Ergebnisse, d. h. der Klassifikationen aus den mehreren gewählten Klassifikationsmodellen KMx mit x = 1, 2, 3, ..., wobei diese zuletzt genannte Ausführung die bevorzugte Ausführung ist, weil sie sich aufgrund ihrer Zuverlässigkeit und Genauigkeit als besonders vorteilhaft erwiesen hat.

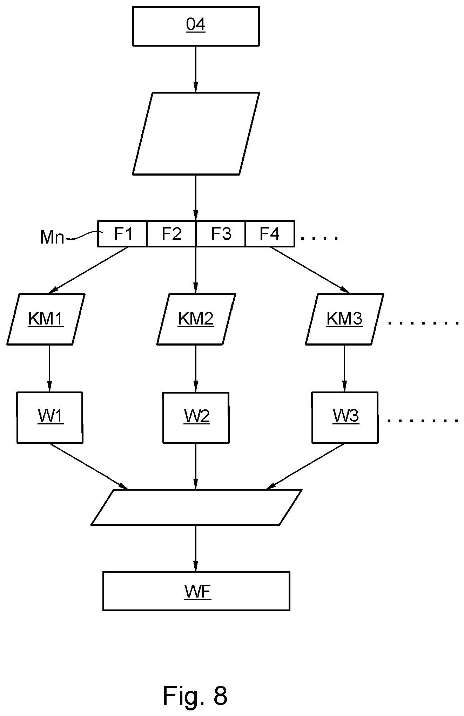

Diese letztere Vorgehensweise ist in der Fig. 8 veranschaulicht. Eine bedruckte Fläche 02 auf einem Substrat 03 einer neuen, d. h. bisher ungeprüften Banknote 01 wird von einer optoelektronischen Erfassungseinrichtung 06 erfasst. In weiteren Verfahrensschritten wird - wie zuvor beschrieben - aus den Roh-Bilddaten der Abbildung 04 der erfassten bedruckten Fläche 02 der Banknote 01 eine bereinigte neue Matrix Mn erstellt, aus der für die Authentifikation von Banknoten 01 durch eine Selektion unterschiedlicher Merkmale unterschiedliche Klassifikationsmodelle KMx mit x = 1, 2, 3, ... gebildet werden. Jedes dieser Klassifikationsmodelle KMx mit x = 1, 2, 3, ... stellt als Ergebnis, d. h. Klassifikation eine Wahrscheinlichkeit Wx mit x = 1, 2, 3, ... bereit, mit der diese neue, d. h. bisher ungeprüfte Banknote 01 als eine echte, authentische Banknote 01 oder als eine gefälschte Banknote 01 zu klassifizieren ist. Anschließend wird in einem wie zuvor z. B. in der Prozessoreinheit 08 automatisch ablaufenden siebten Verfahrensschritt eine Übereinstimmung der Ergebnisse aus diesen Klassifikationsmodellen KMx mit x = 1, 2, 3, ... geprüft. Die finale, endgültige Klassifikation erfolgt dann auf der Grundlage der aus den Ergebnissen aus den verschiedenen Klassifikationsmodellen KMx mit x = 1, 2, 3, ... gebildeten überwiegenden Wahrscheinlichkeit WF. Es kann alternativ aber auch vorgesehen sein, dass jeweils das aus den verschiedenen Klassifikationsmodellen KMx mit x = 1, 2, 3, ... gewonnene Ergebnis mit der höchsten Wahrscheinlichkeit Wx mit x = 1, 2, 3, ... die finale, endgültige Klassifikation der aktuell zu prüfenden Banknote 01 als echte, authentische Banknote 01 oder als gefälschte Banknote 01 bestimmt.

Zusammenfassend ergibt sich ein Verfahren zum Authentifizieren einer auf ihrem Substrat 03 mindestens eine bedruckte Fläche 02 aufweisenden Banknote 01, wobei eine optoelektronische Erfassungseinrichtung 06 von mehreren Exemplaren a; b; c eines gleichen Typs der zu authentifizierenden Banknote 01 jeweils die mindestens eine auf deren jeweiligem Substrat 03 bedruckte Fläche 02 erfasst und einer Prozessoreinheit 08 Roh-Bilddaten zur Visualisierung der jeweiligen erfassten bedruckten Fläche 02 in Form einer Abbildung 04 auf einer mit der Prozessoreinheit 08 datentechnisch verbundenen Anzeigeeinrichtung 09 bereitstellt. Die Prozessoreinheit 08 partitioniert die jeweilige Abbildung 04 in mehrere ROls und transformiert die Roh-Bilddaten jeder dieser ROls mittels einer Transformiereinrichtung 11 jeweils in einen jeweils mehrere Elemente aufweisenden Vektor Fm mit m = 1, 2, 3, ..., wobei die jeweiligen Elemente jedes dieser Vektoren Fm mit m = 1, 2, 3, ... in der Prozessoreinheit 08 durch Ausführung einer ersten mathematischen Operation aus den zu einer bestimmten ROI gehörenden von der optoelektronischen Erfassungseinrichtung 06 bereitgestellten Roh-Bilddaten der Abbildung 04 der bedruckten Fläche 02 des betreffenden Exemplars a; b; c der Banknote 01 extrahiert werden. Dabei charakterisiert jedes Element der aus den ROls einer bestimmten Abbildung 04 transformierten Vektoren Fm mit m = 1, 2, 3, ... jeweils genau ein Merkmal in der betreffenden ROI, wobei unterschiedliche Elemente des jeweiligen Vektors Fm mit m = 1, 2, 3, ... jeweils voneinander verschiedene Merkmale in der betreffenden ROI charakterisieren. Alle aus den ROls einer bestimmten Abbildung 04 transformierten Vektoren Fm mit m = 1, 2, 3, ... werden nun mittels einer in der Prozessoreinheit 08 ausgeführten zweiten mathematischen Operation zu einem einzigen die betreffende Abbildung 04 ganzheitlich repräsentierenden Vektor Fi mit i = 1, 2, 3, ... miteinander verkettet, wobei die aus mehreren Exemplaren a; b; c dieses Typs der zu authentifizierenden Banknote 01 gewonnenen die betreffende Abbildung 04 jeweils ganzheitlich repräsentierenden Vektoren Fi mit i = 1, 2, 3, ... mittels der Prozessoreinheit 08 in einer Matrix M angeordnet werden. Dabei werden in den Spalten der betreffenden Matrix M jeweils gleiche Merkmale aus den betreffenden ROls angeordnet. In der betreffenden Matrix M werden diejenigen Merkmale, die eine höchstmögliche Genauigkeit bei der vorgesehenen Authentifikation eines bestimmten Typs einer Banknote 01 sicherstellen, dadurch selektiert, dass die Prozessoreinheit 08 durch die Ausführung mindestens einer dritten mathematischen Operation analysiert, welchen Beitrag die in einer bestimmten Spalte der Matrix M angeordneten Merkmale aus den betreffenden ROls jeweils zur Authentifikation des bestimmten Typs von Banknote 01 leisten. Dazu wird durch die dritte mathematische Operation eine Korrelation zwischen jedem dieser Merkmale und einem Klassenvektor bestimmt, wobei der Klassenvektor als Klasseninformation eine zuvor festgelegte erste Maßzahl für eine echte, authentische Banknote 01 und eine zuvor festgelegte zweite von der ersten verschiedene Maßzahl für eine gefälschte Banknote 01 aufweist. Die Prozessoreinheit 08 eliminiert aus der betreffenden Matrix M zumindest jeweils diejenigen Merkmale, die für die Authentifikation des betreffenden Typs von Banknote 01 nicht geeignet sind, und erstellt dadurch eine bereinigte neue Matrix Mn, in der weiterhin unterschiedliche Merkmale für die Authentifikation von Banknoten 01 wahlweise bereitstehen. Dabei bilden unterschiedlich gewählte Merkmale jeweils ein Klassifikationsmodell KM, wobei die Authentifikation einer neuen, bisher ungeprüften Banknote 01 unter Verwendung mehrerer Klassifikationsmodelle KMx mit x = 1, 2, 3, ... durchgeführt wird. Zur Durchführung dieses Verfahrens wird vorzugsweise als optoelektronische Erfassungseinrichtung 06 eine Halbleiterkamera eines mobilen elektronischen Gerätes, insbesondere eines Smartphones oder eines Tablets, verwendet. Auch die Speichereinrichtung 07, die Prozessoreinheit 08 - gegebenenfalls mit der integrierten Transformiereinrichtung 11 - und die Anzeigeeinrichtung 09 sind vorzugweise Baueinheiten des die optoelektronische Erfassungseinrichtung 06 aufweisenden Smartphones oder Tablets.

Ein besonderer Vorteil des vorgeschlagenen Verfahrens besteht darin, dass es nicht für jedes Modell eines Smartphones oder Tablets neu erstellt werden muss, sondern plattformunabhängig als eine Applikation auf sozusagen jedem technisch geeigneten Smartphone oder Tablet installiert und ausgeführt werden kann. Mit dem vorgeschlagenen Verfahren können für eine Vielzahl von unterschiedlichen Typen von Banknoten 01 verschiedene Klassifikationsmodelle KMx mit x = 1, 2, 3, ... mit einer jeweils zugehörigen Klasseninformation erlernt und in Form von entsprechenden Programmroutinen gespeichert werden. Dadurch wird einem Benutzer eines derart ausgestatteten Smartphones oder Tablets die Möglichkeit eröffnet, das Authentifizieren einer Banknote 01 selbst durchzuführen, wenn für einen aktuell zu authentifizierenden Typ von Banknote 01 in seinem Smartphone oder Tablet ein Ausführen des vorgeschlagenen Verfahrens eingerichtet worden ist, indem dort zuvor erlernte Klassifikationsmodelle KMx mit x = 1, 2, 3, ... mit einer jeweils zugehörigen Klasseninformation in Form von entsprechenden Programmroutinen gespeichert sind.

### Bezugszeichenliste

- 01: Banknote
- 02: Fläche
- 03: Substrat
- 04: Abbildung
- 05: -
- 06: Erfassungseinrichtung
- 07: Speichereinrichtung
- 08: Prozessoreinheit
- 09: Anzeigeeinrichtung
- 10: -
- 11: Transformiereinrichtung

- a, b, c,: einzelnes Exemplar einer Banknote
- n: Identifikationsmerkmal einer einzelnen ROI
- m: Identifikationsmerkmal eines einzelnen eine ROI repräsentierenden Vektors
- i: Identifikationsmerkmal eines eine gesamte Abbildung identifizierenden Vektors
- Fi: Vektor
- Fm: Vektor
- ROln: Bereich von Interesse
- KM: Klassifikationsmodell
- M: Matrix
- Mn: neue bereinigte Matrix
- Wx: Wahrscheinlichkeit der Klassifikation
- WF: finale Klassifikation
- x: Identifikationsmerkmal eines Klassifikationsmodells

## Patentansprüche

1. Verfahren zum Authentifizieren einer auf ihrem Substrat (03) mindestens eine bedruckte Fläche (02) aufweisenden Banknote (01), wobei eine optoelektronische Erfassungseinrichtung (06) von mehreren Exemplaren (a; b; c) eines gleichen Typs der zu authentifizierenden Banknote (01) jeweils die mindestens eine auf deren jeweiligem Substrat (03) bedruckte Fläche (02) erfasst und einer Prozessoreinheit (08) Roh-Bilddaten zur Visualisierung der jeweiligen erfassten bedruckten Fläche (02) in Form einer Abbildung (04) auf einer mit der Prozessoreinheit (08) datentechnisch verbundenen Anzeigeeinrichtung (09) bereitstellt, wobei die Prozessoreinheit (08) die jeweilige Abbildung (04) in mehrere ROls partitioniert und die Roh-Bilddaten jeder dieser ROls mittels einer Transformiereinrichtung (11) jeweils in einen jeweils mehrere Elemente aufweisenden Vektor (Fm mit m = 1, 2, 3, ...) transformiert, wobei die jeweiligen Elemente jedes dieser Vektoren (Fm mit m = 1, 2, 3, ...) in der Prozessoreinheit (08) durch Ausführung einer ersten mathematischen Operation aus den zu einer bestimmten ROI gehörenden von der optoelektronischen Erfassungseinrichtung (06) bereitgestellten Roh-Bilddaten der Abbildung (04) der bedruckten Fläche (02) des betreffenden Exemplars (a; b; c) der Banknote (01) extrahiert werden, wobei jedes Element der aus den ROls einer bestimmten Abbildung (04) transformierten Vektoren (Fm mit m = 1, 2, 3, ...) jeweils genau ein Merkmal in der betreffenden ROI charakterisiert, wobei unterschiedliche Elemente des jeweiligen Vektors (Fm mit m = 1, 2, 3, ...) jeweils voneinander verschiedene Merkmale in der betreffenden ROI charakterisieren, wobei alle aus den ROls einer bestimmten Abbildung (04) transformierten Vektoren (Fm mit m = 1, 2, 3, ...) mittels einer in der Prozessoreinheit (08) ausgeführten zweiten mathematischen Operation zu einem einzigen die betreffende Abbildung (04) ganzheitlich repräsentierenden Vektor (Fi mit i = 1, 2, 3, ...) miteinander verkettet werden, wobei die aus mehreren Exemplaren (a; b; c) dieses Typs der zu authentifizierenden Banknote (01) gewonnenen die betreffende Abbildung (04) jeweils ganzheitlich repräsentierenden Vektoren (Fi mit i = 1, 2, 3, ...) mittels der Prozessoreinheit (08) in einer Matrix (M) angeordnet werden, wobei in den Spalten der betreffenden Matrix (M) jeweils gleiche Merkmale aus den betreffenden ROls angeordnet werden, wobei in der betreffenden Matrix (M) diejenigen Merkmale, die eine höchstmögliche Genauigkeit bei der vorgesehenen Authentifikation einer bestimmten Banknote (01) sicherstellen, dadurch selektiert werden, dass die Prozessoreinheit (08) durch die Ausführung mindestens einer dritten mathematischen Operation analysiert, welchen Beitrag die in einer bestimmten Spalte der Matrix (M) angeordneten Merkmale aus den betreffenden ROls jeweils zur Authentifikation des bestimmten Typs von Banknote (01) leisten, wobei durch die dritte mathematische Operation eine Korrelation zwischen jedem dieser Merkmale und einem Klassenvektor bestimmt wird, wobei der Klassenvektor als Klasseninformation eine zuvor festgelegte erste Maßzahl für eine echte, authentische Banknote (01) und eine zuvor festgelegte zweite von der ersten verschiedene Maßzahl für eine gefälschte Banknote (01) aufweist, wobei die Prozessoreinheit (08) aus der betreffenden Matrix (M) zumindest jeweils diejenigen Merkmale eliminiert, die für die Authentifikation des betreffenden Typs von Banknote (01) nicht geeignet sind, und dadurch eine bereinigte neue Matrix (Mn) erstellt, in der unterschiedliche Merkmale für die Authentifikation des bestimmten Typs von Banknote (01) wahlweise bereitstehen, wobei unterschiedlich gewählte Merkmale jeweils ein Klassifikationsmodell (KM) bilden, wobei die Authentifikation einer aktuell zu authentifizierenden Banknote (01) unter Verwendung mehrerer Klassifikationsmodelle (KMx mit x = 1, 2, 3, ...) durchgeführt wird.

2. Verfahren nach Anspruch 1, **dadurch gekennzeichnet, dass** als optoelektronische Erfassungseinrichtung (06) eine Halbleiterkamera eines mobilen elektronischen Gerätes, insbesondere eines Smartphones oder eines Tablets, verwendet wird.

3. Verfahren nach Anspruch 1 oder 2, **dadurch gekennzeichnet, dass** als erste mathematische Operation eine Wavelet-Transformation verwendet wird und/oder dass als erste mathematische Operation statistische Momente aus einem Wavelet-Histogramm verwendet werden.

4. Verfahren nach Anspruch 1 oder 2 oder 3, **dadurch gekennzeichnet, dass** für eine finale Klassifikation einer aktuell zu authentifizierenden Banknote (01) diejenige Klassifikation desjenigen Klassifikationsmodells (KM) verwendet wird, welches bei einer zuvor durchgeführten Authentifikation von Banknoten (01) desselben Typs zu einer Klassifikation mit der höchsten Genauigkeit und Zuverlässigkeit geführt hat.

5. Verfahren nach Anspruch 1 oder 2 oder 3 oder 4, **dadurch gekennzeichnet, dass** die finale Klassifikation der aktuell zu authentifizierenden Banknote (01) auf der Grundlage einer Übereinstimmung der Klassifikationen aus den mehreren gewählten Klassifikationsmodellen (KMx mit x = 1, 2, 3, ...) erfolgt.

## Claims

1. Method for authenticating a banknote (01) having at least one printed area (02) on the substrate (03) thereof, an optoelectronic capturing device (06) capturing the at least one area (02) that is printed on the respective substrate (03) of each of a plurality of copies (a; b; c) of the same type of banknote (01) to be authenticated and providing raw image data to a processor unit (08) for visualizing the respective captured printed area (02) in the form of an image (04) on a display device (09) that is connected to the processor unit (08) for data purposes; the processor unit (08) partitioning the respective image (04) into a plurality of ROIs and transforming the raw image data of each of these ROIs by means of a transformation device (11) to a respective vector (Fm, where m = 1, 2, 3, ...), each comprising a plurality of elements; the respective elements of each of these vectors (Fm, where m = 1, 2, 3, ...) being extracted in the processor unit (08) by the execution of a first mathematical operation from the raw image data of the image (04) of the printed area (02) of the relevant copy (a; b; c) of the banknote (01) which belong to a certain ROI and are provided by the optoelectronic capturing device (06); each element of the vectors (Fm, where m = 1, 2, 3, ...) transformed from the ROIs of a certain image (04) in each case characterizing exactly one feature in the relevant ROI; different elements of the respective vector (Fm, where m = 1, 2, 3, ...) each characterizing differing features in the relevant ROI; all vectors (Fm, where m = 1, 2, 3, ...) transformed from the ROIs of a certain image (04) being concatenated by means of a second mathematical operation executed in the processor unit (08) to form a single vector (Fi, where i = 1, 2, 3, ...) that comprehensively represents the relevant image (04); the vectors (Fi, where i = 1, 2, 3, ...) which are obtained from a plurality of copies (a; b; c) of this type of banknote (01) to be authenticated and each comprehensively represent the relevant image (04) being arranged in a matrix (M) by means of the processor unit (08); identical features from the relevant ROIs being each arranged in the columns of the relevant matrix (M); in the relevant matrix (M), the features that ensure the highest possible accuracy during the intended authentication of a certain banknote (01) being selected by the processor unit (08) analyzing, as a result of the execution of at least one third mathematical operation, the contribution that features from the relevant ROIs which are arranged in a certain column of the matrix (M) each provide for the authentication of the certain type of banknote (01); a correlation between each of these features and a class vector being determined by the third mathematical operation; the class vector containing a previously defined first measure for a genuine, authentic banknote (01) and a previously defined second measure, which differs from the first, for a counterfeit banknote (01) as class information; the processor unit (08) eliminating from the relevant matrix (M) at least in each case those features which are not suitable for authenticating the relevant type of banknote (01) and thereby creating an adjusted new matrix (Mn), in which differing features are selectively available for the authentication of the certain type of banknote (01); differently selected features each forming a classification model (KM); and the authentication of a banknote (01) to be presently authenticated being carried out using a plurality of classification models (KMx, where x = 1, 2, 3, ...).

2. Method according to claim 1, **characterized in that** a semiconductor camera of a mobile electronic device, in particular of a smartphone or of a tablet, is used as the optoelectronic capturing device (06).

3. Method according to claim 1 or 2, **characterized in that** a wavelet transform is used as the first mathematical operation, and/or **in that** statistical moments from a wavelet histogram are used as the first mathematical operation.

4. Method according to claim 1 or 2 or 3, **characterized in that** the classification of the classification model (KM) which during a previously performed authentication of banknotes (01) of the same type yielded a classification having maximum accuracy and reliability is used for a final classification of a banknote (01) to be presently authenticated.

5. Method according to claim 1 or 2 or 3 or 4, **characterized in that** the final classification of the banknote (01) to be presently authenticated is carried out based on an agreement of the classifications from the plurality of selected classification models (KMx, where x = 1, 2, 3, ...).

## Revendications

1. Procédé d'authentification d'un billet de banque (01) présentant sur son substrat (03) au moins une surface (02) imprimée, dans lequel un dispositif de détection (06) optoélectronique de plusieurs exemplaires (a; b; c) d'un même type du billet de banque (01) à authentifier détecte respectivement la au moins une surface (02) imprimée sur son substrat (03) respectif et met à disposition d'une unité de traitement (08), sur un dispositif d'affichage (09) relié par technique de données avec l'unité de traitement (08), des données d'image brutes pour une visualisation de la surface (02) imprimée respectivement détectée sous la forme d'une image (04), dans lequel l'unité de traitement (08) partitionne l'image (04) respective en plusieurs régions d'intérêt et transforme respectivement, au moyen d'un dispositif de transformation (11), les données d'image brutes de chacune de ces régions d'intérêt en un vecteur (Fm avec m = 1, 2, 3, ...) présentant respectivement plusieurs éléments, dans lequel les éléments respectifs de chacun de ces vecteurs (Fm avec m = 1, 2, 3, ...) dans l'unité de traitement (08) sont extraits, par exécution d'une première opération mathématique, des données d'image brutes, de l'image (04) de la surface (02) imprimée de l'exemplaire (a; b; c) concerné du billet de banque (01), appartenant à une région d'intérêt déterminée et mises à disposition par le dispositif de détection (06) optoélectronique, dans lequel chaque élément des vecteurs (Fm avec m = 1, 2, 3, ...) transformés à partir des régions d'intérêt d'une image (04) déterminée caractérise respectivement une caractéristique exactement dans la région d'intérêt concernée, dans lequel des éléments différents du vecteur (Fm avec m = 1, 2, 3, ...) respectif caractérisent respectivement des caractéristiques différentes les unes des autres dans la région d'intérêt concernée, dans lequel tous les vecteurs (Fm avec m = 1, 2, 3, ...) transformés à partir des régions d'intérêt d'une image (04) déterminée sont concaténés entre eux au moyen d'un deuxième opération mathématique exécutée dans l'unité de traitement (08) pour former un unique vecteur (Fi avec i = 1, 2, 3, ...) représentant intégralement l'image (04) concernée, dans lequel les vecteurs (Fi avec i = 1, 2, 3, ...), obtenus à partir de plusieurs exemplaires (a; b; c) de ce type du billet de banque (01) à authentifier et représentant respectivement intégralement l'image (04) concernée, sont agencés dans une matrice (M) au moyen de l'unité de traitement (08), dans lequel des mêmes caractéristiques provenant des régions d'intérêt concernées sont respectivement agencées dans les colonnes de la matrice (M) concernée, dans lequel les caractéristiques qui garantissent une précision la plus élevée possible lors de l'authentification prévue d'un billet de banque (01) déterminé sont ainsi sélectionnées dans la matrice (M) concernée par le fait que l'unité : de traitement (08) analyse, par l'exécution d'au moins une troisième opération mathématique, quelle contribution les caractéristiques agencées dans une colonne déterminée de la matrice (M) apportent respectivement, à partir des régions d'intérêt concernées, à l'authentification du type déterminé de billet de banque (01), dans lequel une corrélation entre chacune de ces caractéristiques et un vecteur de classe est déterminée par la troisième opération mathématique, dans lequel le vecteur de classe en tant qu'information de classe présente une première mesure définie au préalable pour un billet de banque (01) authentique et vrai et une seconde mesure définie au préalable et différente de la première pour un billet de banque (01) falsifié, dans lequel l'unité de traitement (08) élimine hors de la matrice (M) concernée au moins respectivement la caractéristique qui n'est pas appropriée pour l'authentification du type concerné de billet de banque (01) et ce faisant établit une nouvelle matrice (Mn) nettoyée et dans laquelle se trouvent à disposition au choix des caractéristiques différentes pour l'authentification du type déterminé de billet de banque (01), dans lequel des caractéristiques choisies différemment forment respectivement un modèle de classification (KM), dans lequel l'authentification d'un billet de banque (01) à authentifier actuellement est réalisée en utilisant plusieurs modèles de classification (KMx avec x = 1, 2, 3, ...).

2. Procédé selon la revendication 1, **caractérisé en ce qu'**en tant que dispositif de détection (06) optoélectronique est utilisée une caméra semiconductrice d'un appareil électronique mobile, en particulier d'un téléphone intelligent ou d'une tablette.

3. Procédé selon la revendication 1 ou 2, **caractérisé en ce qu'**en tant que première opération mathématique est utilisée une transformée en ondelettes et/ou **en ce qu'**en tant que première opération mathématique sont utilisés des moments statistiques provenant d'un histogramme en ondelettes.

4. Procédé selon la revendication 1 ou 2 ou 3, **caractérisé en ce que** pour une classification finale d'un billet de banque (01) à authentifier actuellement est utilisée la classification du modèle de classification (KM) qui lors d'une authentification réalisée au préalable de billets de banque (01) du même type a mené à une classification avec la précision et la fiabilité les plus élevées.

5. Procédé selon la revendication 1 ou 2 ou 3 ou 4, **caractérisé en ce que** la classification finale du billet de banque (01) à authentifier actuellement s'effectue sur la base d'une concordance des classifications provenant des plusieurs modèles de classification (KMx avec x = 1, 2, 3, ...) choisis.
